(19) Europäisches Patentamt
European Patent Office
Office européen des brevets

(11) Numéro de publication: **0 327 472**
**A1**

# (12) DEMANDE DE BREVET EUROPEEN

(21) Numéro de dépôt: **89400322.7**

(22) Date de dépôt: **03.02.89**

(51) Int. Cl.⁴: **B 07 C 3/18**
B 07 C 3/00

(30) Priorité: **03.02.88 FR 8801258**

(43) Date de publication de la demande:
**09.08.89 Bulletin 89/32**

(84) Etats contractants désignés:
**AT BE CH DE ES FR GB GR IT LI LU NL SE**

(71) Demandeur: **Cesarini, Roger**
**128, rue Paul Doumer**
**F-94290 Villeneuve le Roi (Val de Marne) (FR)**

(72) Inventeur: **Cesarini, Roger**
**128, rue Paul Doumer**
**F-94290 Villeneuve le Roi (Val de Marne) (FR)**

(74) Mandataire: **Rataboul, Michel Charles**
**CMR INTERNATIONAL 69, rue de Richelieu**
**F-75002 Paris (FR)**

## (54) Procédé et dispositif pour l'adressage à un destinataire.

(57) Le procédé conforme à l'invention est destiné à l'adressage à un destinataire soit d'un message, notamment informatique, soit d'un objet tel que document, pli, lettre, paquet, colis, fardeau et autres.

Il est caractérisé en ce que l'on affecte à chaque message, ou objet, deux repères dits respectivement "identifiant" et "situant" qui correspondent ensemble au seul destinataire, l'identifiant étant formé par la combinaison d'un code de situation géographique et d'un numéro de téléphone du destinataire, tandis que le situant est formé par des coordonnées, de préférence sous forme de chiffres, issues d'une trame que l'on établit pour une zone géographique déterminée, coordonnées qui correspondent à une maille de la trame représentant le plus précisément possible la situation géographique du destinataire.

Selon un mode de réalisation particulier, le code de situation géographique est formé par le code officiel d'une zone administrative telle qu'un Département pour la France, un County" pour les Etats Unis et le Royaume Uni, un "Landkreis" pour l'Allemagne, et analogue.

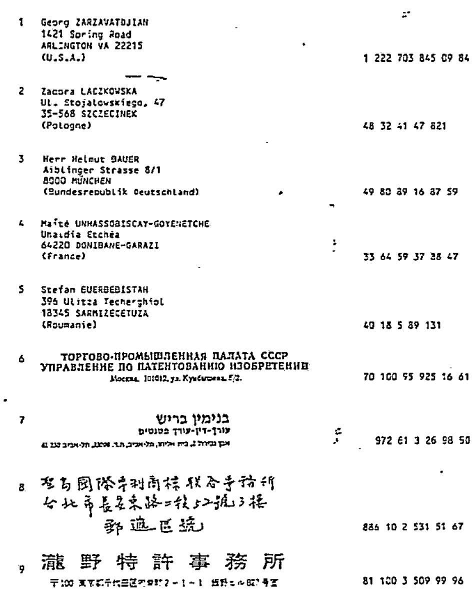


Fig.1

Bundesdruckerei Berlin

EP 0 327 472 A1

## Description

### PROCEDE ET DISPOSITIF POUR L'ADRESSAGE A UN DESTINATAIRE

Il n'existe actuellement aucun moyen permettant l'adressage automatique d'un message à un destinataire individuel, sans nécessiter la saisie de données par une personne.

C'est le cas, par exemple, du document EP-A-0 272 355 qui décrit une installation comprenant un ordinateur contrôlé par une administration centrale et dans la mémoire duquel sont stockées toutes les informations correspondant à tous les destinataires possibles d'envois postaux.

Or, on sait que 87 % des erreurs de transmission, qu'il s'agisse de processus informatiques ou du routage d'objets (lettres, colis etc.), sont dues à des opérations de saisie manuelle erronées.

En outre, ce document prévoit la création d'enveloppes ou cartes spéciales standardisées, dont les données doivent être lues par l'ordinateur.

Les données correspondent exclusivement à des indications postales : nom, adresse et code postal. A noter que le code postal est commun à un très grand nombre de destinataires et n'a aucun caractère individuel.

La présente invention apporte une solution au problème de l'acheminement et a une portée quasi universelle. Elle se situe dans le domaine industriel des transferts immatériels (données informatiques) ou matériels : transport d'objets physiques d'un endroit à un autre.

Elle permet de résoudre plusieurs problèmes industriels caractérisés : tri, transport, commande d'appareils de manutention, chargement de véhicules, groupage fin etc., le tout sans aucune opération de saisie.

Il faut souligner le caractère utilitaire de l'invention en indiquant qu'elle permet d'éliminer beaucoup des difficultés que l'on rencontre avec l'internationalisation des échanges, du fait des inadaptations culturelles à des langues, écritures et orthographes étrangères.

On connaît, bien entendu, la méthode immatérielle et dénuée de toute activité inventive qui consiste à affecter un code en chiffres à un destinataire donné. Ce code est plus ou moins élaboré selon qu'il contient des signifiants de lieu, de dates, et analogues. C'est le cas des destinataires groupés en fichiers et auxquels des entreprises doivent envoyer des objets : journaux, catalogues, colis etc. En voici deux exemples réels, pris par hasard entre des milliers différents :
- 091136 33AD U1609400 8888 552 pour l'acheminement d'un catalogue;
- 39738 820000 76001077R4377220615 0569 pour l'acheminement d'un journal à un abonné.

On remarque que ces codes n'ont aucune signification pour une personne étrangère à l'expéditeur et encore faut-il préciser que si un tel code a bien une signification en clair, elle ne peut être perçue que par ceux qui en connaissent la clef.

On vient de citer deux exemples d'entreprises privées. Voici deux exemples de services publics nationaux en France :
- B 402112948000457964 pour identifier une entreprise au Registre du Commerce et des Sociétés;
- 1 54 05 64 023 458 pour identifier une personne à la matricule de la Sécurité Sociale en France.

Il est évident que ces codes ne sont pas arbitraires et l'on peut, à toutes fins utiles, rappeler ici la structure du second de ces codes : le "numéro de Sécurité Sociale" attribué en France à un bénéficiaire :
- 1 signifie qu'il s'agit d'un sujet masculin,
- 54 est le millésime de son année de naissance,
- 05 est le numéro du mois de l'année (Mai),
- 64 est le numéro du département de naissance (Pyrénées Atlantiques).
- 023 est un numéro attribué à la commune de naissance,
- 458 est un numéro d'ordre attribué par ordre chronologique.

Ces exemples montrent une caractéristique fondamentale des codes existants : ils sont individuels à chaque organisme créateur et toute "signification" mise à part, ils n'ont aucun caractère à vocation internationale, universel susceptible, notamment, de commander des machines et installations de tri dans un ou plusieurs pays de langues et, même, écritures différentes. Ils sont inaccessibles au public et, même, ils sont souvent strictement confidentiels car ils constituent la clef d'accès à certaines informations privées : date d'abonnement, système de paiement, liste de prospection etc. De toutes façons, il n'existe aucun "catalogue" permettant de les utiliser à d'autres fins que celles voulues par le seul organisme d'origine.

La présente invention s'écarte absolument de ces codifications élémentaires en permettant de créer un véritable moyen de commande utilisable par quiconque pour réaliser des processus de transfert et de transport et, pourtant, qui ne contient aucun élément confidentiel privé.

A cette fin, l'invention a pour objet un procédé pour l'adressage à un destinataire soit d'un message, notamment informatique, soit d'un objet tel que document, pli, lettre, paquet, colis, fardeau et autres, caractérisé en ce que l'on affecte à chaque message, ou objet, deux repères dits respectivement "identifiant" et "situant" qui correspondent ensemble au seul destinataire, l'identifiant étant formé par la combinaison d'un code de situation géographique et d'un numéro de téléphone du destinataire, tandis que le situant est formé par des coordonnées, de préférence sous forme de chiffres, issues d'une trame que l'on établit pour une zone géographique déterminée, coordonnées qui correspondent à une maille de la trame représentant le plus précisément possible la situation géographique du destinataire.

Selon d'autres caractéristiques de ce procédé :

- le code de situation géographique est formé par le code officiel d'une zone administrative telle qu'un Département pour la France, un "County" pour les Etats Unis et le Royaume Uni, un "Landkreis" pour l'Allemagne, et analogue;
- le code de situation géographique est formé par le code postal de l'adresse du destinataire;
- la trame est formée par le cadastre représentant des parcelles numérotées, les coordonnées étant soit la combinaison d'abcisses et d'ordonnées, soit le numéro des parcelles;
- la trame est un quadrillage;
- la trame comprend au moins un ensemble de zones déterminées individuellement par des repères, certaines au moins de ces zones comprenant un quadrillage associé à des coordonnées;
- le quadrillage des zones correspondant à des villes est à maille plus serrée que celle du quadrillage des zones correspondant à la campagne.

L'invention a également pour objet un dispositif pour la mise en oeuvre du procédé ci-dessus, caractérisé en ce qu'il comprend, éventuellement dans des lieux distincts, d'une première part une mémoire contenant pour chaque destinataire possible, son nom et son adresse en clair ainsi que son "identifiant" et son "situant", d'une deuxième part un ordinateur et au moins un logiciel de traitement de données, d'une troisième part un appareil destiné à marquer des objets tels que documents, plis, lettres, paquets, colis, fardeaux et autres, soit directement, soit par l'intermédiaire d'étiquettes, plaques et analogues afin que chaque objet porte à la fois les données en clair, l'identifiant et le situant ainsi qu'éventuellement un code de lecture automatique, tel que celui connu sous le nom de "code à barres", et d'une quatrième part des moyens de tri unitaire et de groupage des objets marqués en vue de leur expédition.

Selon d'autres caractéristiques de ce dispositif :
- il comprend des moyens de tri unitaire et de groupage des objets marqués, avant distribution aux destinataires;
- les moyens de tri unitaire et de groupage des objets marqués avant distribution comprennent un carrousel associé à au moins une arrivée d'objets et à au moins une sortie d'objets, cette sortie, respectivement chaque sortie, étant munie d'un guide mobile entre deux positions dans l'une desquelles il est situé sur le parcours du carrousel en vue de diriger vers la sortie correspondante l'objet situé sur le carousel et destiné à quitter celui-ci par ladite sortie et dans l'autre desquelles il est hors du parcours du carousel en vue de laisser passer chaque objet devant éviter ladite sortie;
- il comprend des moyens d'affichage tels qu'un écran pour la visualisation de représentations graphiques de zones géographiques et de leur trame correspondante.

L'invention sera mieux comprise par la description détaillée ci-après faite en référence au dessin annexé. Bien entendu, la description et le dessin ne sont donnés qu'à titre d'exemple indicatif et non limitatif.

La figure 1 est un tableau montrant à gauche des noms et adresses en clair, à droite les identifiants conformes à l'invention.

La figure 2 est une carte de France métropolitaine faisant apparaître ses Départements, avec agrandissement de la ville de Paris.

La figure 3 est un plan de Paris comportant toutes les "plaques" du plan cadastral de Paris intra muros, avec système de coordonnées conforme à l'invention et localisation de la "plaque", ou "parcelle" ayant pour coordonnées 08 14.

La figure 4 représente la plaque, ou parcelle, 08 14 avec une trame de 10 mètres en abscisses et 10 mètres en ordonnées et système de coordonnées conforme à l'invention.

La figure 5 est un extrait du guide des abonnés au téléphone de la ville de Paris classés par rues, et comportant quelques adresses de la rue Saint Denis.

La figure 6 représente un exemple de deux étiquettes conformes à l'invention et portant d'une part en clair les nom, adresse, identifiant et situant d'un destinataire et d'autre part en code à barres l'identifiant et le situant.

La figure 7 représente un bordereau d'une société de transport et messagerie et sur lequel apparaît l'inventaire de colis avec indication de l'identifiant de l'expéditeur et du destinataire correspondants ainsi que du situant du destinataire, le tout pour quatre agences et un centre de groupement.

La figure 8 représente un état des livraisons correspondant au bordereau de la figure 7 et groupées pour la parcelle 08 14, avec indications des coordonnées de chaque destinataire.

Selon l'invention, on associe aux éléments à acheminer un repère constitué non pas par un simple code mais un véritable "identifiant" puisqu' il comprend des signes (de préférence des chiffres seulement) qui correspondent à des éléments publics et, même, internationaux, et qui identifient avec certitude et précision tout destinataire abonné au téléphone dans son pays.

De ce fait, toutes les procédures d'acheminement, y compris le transport physique d'objets, peuvent être réalisées sans aucune opération de saisie manuelle. Cet automatisme permet de faire fonctionner des machines de toutes sortes et de limiter les interventions humaines au strict nécessaire.

Il en résulte que l'on élimine les problèmes parfois insolubles de langues et d'orthographe puisque l'on identifie à coup sûr un destinataire avec des chiffres, quelle que soit sa nationalité.

Sur la figure 1, on voit un tableau qui comprend deux colonnes. Dans la colonne de gauche se trouvent des noms et adresses en clair et l'on voit que ces mentions sont complexes parce qu'elles ont des écritures différentes et qu'avec une même écriture elles sont loin d'être uniformes. Dans la colonne de droite, en regard de chaque personne, se trouve le repère ou "identifiant" en chiffres correspondant exactement. On voit immédiatement que cet identifiant est pratiquement universel et peut être lu d'emblée par toute personne, quelle que soit sa nationalité et sa culture. On peut affirmer, par exemple, qu'un Japonais peut sans difficulté effectuer un envoi à la personne située en septième position s'il peut utiliser l'identifiant correspondant de la colonne de droite car il n'aurait aucunement besoin de "lire" le nom et l'adresse, il lui suffirait d'utiliser des chiffres.

L'identifiant comprend deux parties essentielles, de natures différentes et qui se recoupent pour agir ensemble comme un détrompeur et éviter toute erreur : la première partie est formée par un code de situation géographique.

En l'occurrence, le code de situation géographique comprend deux groupes. Le premier groupe peut, selon les pays, comprendre un, deux ou trois chiffres et constitue le code international qui identifie le Pays du destinataire pour les appels téléphoniques automatiques. Dans l'ordre du tableau, on trouve pour le premier exemple de destinataire le nombre 1 qui identifie les Etats Unis; pour le deuxième, le nombre 48 qui identifie la Pologne; pour le troisième, le nombre 49 qui identifie l'Allemagne Fédérale, pour le quatrième, le nombre 33 qui identifie la France, pour le cinquième, le nombre 40 qui identifie la Roumanie, pour le sixième, le nombre 70 qui identifie l'U.R.S.S., pour le septième, le nombre 972 qui identifie Israël, pour le huitième, le nombre 886 qui identifie la République de Chine et pour le neuvième et dernier exemple de ce tableau, le nombre 81 qui identifie le Japon.

Le deuxième groupe de chiffres est composé de la partie du code postal officiel administratif connu de tous et de libre accès qui caractérise en France le Département et dans la plupart des pays une division administrative comparable : County, Landkreis, etc. Dans l'ordre du tableau, on trouve pour le premier destinataire le nombre 222 qui indique le County contenant la ville de Arlington; pour le deuxième, le nombre 32 qui indique le district dans lequel se trouve la ville de Szczecinek; pour le troisième, le nombre 80 constitué par les deux premiers chiffres du code postal de Munich; pour le quatrième le nombre 64 correspondant au département des Pyrénées Atlantiques, pour le cinquième le nombre 18 qui correspond à "l'Albaiulia" (équivalent roumain du Département français) contenant la ville de Sarmizecetuza, pour le sixième le nombre 100 qui est le code postal de Moscou, pour le septième, le nombre 6 qui est le code postal de Tel Aviv, pour le huitième le nombre 10 qui est le code postal de Taïpeh et pour le neuvième et dernier exemple de ce tableau, le nombre 100 qui est le code postal de Tokyo.

Tous les autres chiffres sont ceux qui composent le numéro de téléphone du destinataire. On remarque que la combinaison d'un code de situation géographique et du numéro de téléphone permet d'éviter des erreurs grossières qui résulteraient du groupage d'un numéro de téléphone et d'un code de lieu incompatibles, car il y a une corrélation entre ces deux éléments.

On voit que pour différents pays, le nombre final est variable. Si l'on veut standardiser cet identifiant, notamment en informatique, il est souhaitable de lui donner une structure constante. Ici, il y a deux identifiants qui ont quatorze chiffres : le premier et le sixième. On pourrait alors imaginer de compléter les autres identifiants jusqu'à quatorze chiffres aussi mais on remarque que le premier n'a qu'un chiffre (1) pour désigner le pays, alors que certains pays sont identifiés par un code à trois chiffres : le septième et le huitième (972 pour Israël et 886 pour la République de Chine). Il est donc plus rationnel de prévoir toujours le maximum de chiffres, ce qui donnerait par exemple :

- 001 222 703 845 009 094 pour le premier,
- 048 032 000 041 047 821 pour le deuxième,
- 070 100 095 925 016 061 pour le sixième,
- 886 010 002 531 051 067 pour le huitième, etc.

L'identifiant que l'on vient de décrire doit être complété si l'on veut assurer la livraison d'objets : courrier, articles commandés par correspondance, approvisionnement de magasins par des fournisseurs, etc.

Le complément dit "situant" permet de déterminer avec la plus grande précision la position géographique du destinataire et, en combinaison avec l'identifiant, permet d'asurer des commandes de machines et installations automatiques.

Afin d'assurer l'universalité du procédé, il est avantageux de n'utiliser que des chiffres et c'est ainsi que l'on a retenu l'exemple qui suit. Cependant, dans la pratique, on peut être contraints d'adopter des lettres ou autres signes selon les réglementations ou habitudes d'un pays considéré (système alpha-numérique).

Il faut tout d'abord établir des zones géographiques de plus en plus resserrées pour résoudre le problème du plus général ou plus particulier. Par comparaison avec l'optique, on pourrait dire que l'on agit comme avec un zoom.

On sait que le monde entier est divisé selon les coordonnées U.T.M. en carrés de 100 kilomètres de côté avec rattrapage triangulaire tous les 6 degrés de longitude, puis par affinements successifs et selon les besoins, jusqu'à des carrés de 100 mètres de côté, de 10 mètres de côté, de 1 mètre de côté. On peut ainsi localiser un point (et donc le domicile d'un destinataire) à 1 mètre près, en coordonnées mondiales.

Le procédé selon l'invention n'a donc pas de limites territoriales fonctionnelles. Mais, pour fixer les idées sans compliquer excessivement la description, on partira d'un pays et non du monde entier.

Sur la figure 2, on a représenté une carte de la France Métropolitaine et ses départements. Elle comprend des villes ou zones urbaines et des campagnes ou zones rurales. Les densités de population, et donc de destinataires possibles, sont différentes dans une zone urbaine et dans une zone rurale. Pour illustrer l'invention, on a choisi l'exemple d'une zone urbaine qui permet de montrer les possibilités de l'invention mieux qu'une zone rurale simple. Sur cette carte, on a situé Paris, choisi comme zone urbaine.

Sur la figure 3, on a représenté la ville de Paris intra muros, c'est-à-dire en excluant ses banlieues et toute la zone urbaine de couronne. La Municipalité a découpé la ville en parcelles régulières représentées par des plans rectangulaires ou "plaques" qui constituent une trame et qui portent chacune des repères. On n'a pas retenu ces repères, bien qu'officiels, publics et de libre accès, car ils sont inutilement compliqués et comportent des lettres ainsi que des chiffres romains contraires au souci d'universalité du procédé selon l'invention.

En revanche, on voit que cette disposition existante est particulièrement propice à l'adoption d'un système de coordonnées rectangulaires.

A la manière de coordonnées cartésiennes, on numérote à partir d'une origine commune les alignements horizon taux des parcelles de bas en haut et les colonnes verticales de gauche à droite.

Pour la ville de Paris, on a ainsi treize lignes et vingt trois colonnes.

Pour illustrer l'invention, on a choisi la parcelle qui a pour coordonnées 08 14 car on donne, par convention, le premier rang aux lignes horizontales.

Cette parcelle est représentée sur la figure 4.

L'étude a montré que dans un cas de densité humaine comme celle de Paris, il fallait prévoir une trame assez serrée et l'on a retenu dix mètres entre les lignes horizontales et dix mètres entre les lignes verticales. Une trame plus serrée serait nécessaire si, dans l'ensemble, les habitations avaient souvent moins de dix mètres. Au contraire, on pourrait avoir une trame plus lâche avec des bâtiments généralement plus grands. Le choix de la trame dépend donc des conditions locales mais on verra que le procédé est très souple et s'adapte à toutes les trames possibles et, bien entendu, exprimées dans n'importe quel système de mesures : système métrique ou pas.

On donne aux lignes et aux colonnes des repères en abscisses et en ordonnées. Ici, par analogie avec un système cartésien comportant une origine unique, on fait progresser les nombres de bas en haut et de gauche à droite à partir de l'angle inférieur gauche de la parcelle.

Pour faciliter la lecture, les chiffres des dizaines sont plus grands que les chiffres des unités. On voit que pour chaque parcelle, on a quatre vingt lignes horizontales et cinquante cinq colonnes verticales.

Après avoir établi cette trame, on détermine les coordonnées de chaque immeuble selon son adresse officielle. A titre d'exemple, on a représenté sur la figure 5 un extrait de l'annuaire officiel des abonnés au téléphone classés "par rues". On a retenu pour exemple le cas de la rue Saint Denis que l'on a tracée en trait plus épais que les autres sur le plan 08 14. On voit que l'immeuble situé au numéro 107 et apparaissant sur la parcelle 08 14 a pour coordonnées 11 13 si l'on adopte la convention de placer les abscisses au premier rang et les ordonnées au second et, inversement, 13 11 si l'on adopte la convention de placer les ordonnées au premier rang et les abscisses au second.

Avec les moyens habituels, on rédigerait ainsi l'enveloppe, ou l'étiquette d'un colis destiné au premier habitant (par ordre alphabétique) de cet immeuble :

Monsieur ALBERGE Marcel
107 rue Saint Denis
75001 PARIS
(France)

On a montré, avec le tableau de la figure 1 qu'une adresse de ce genre n'est vraiment claire que pour un Français. Si en revanche on applique le procédé conforme à l'invention, on constate que cette personne est parfaitement identifiée et située de la manière suivante, à partir de n'importe quel endroit du monde :

33 75 42 60 21 44 08 14 11 13

Dans le monde entier, il n'y a qu'une personne et une seule qui correspond à cet identifiant et ce situant. Aucune erreur n'est possible, même dans un grand ensemble d'immeubles puisqu' une seule personne possède le numéro de téléphone indiqué.

Cependant, on peut introduire dans le situant des précisions supplémentaires pour un bâtiment, un étage, une porte, un numéro de boîte aux lettres. Un code particulièrement intéressant est celui correspondant à l'étage de l'immeuble auquel se trouve le destinataire. Après avoir obtenu lmes coordonnées x et y dans un plan, on peut obtenir la coordonnée z dans la troisième dimension. On peut, par ou trois personnes portent le même nom et possèdent des numéros de téléphone voisins. Leur identifiant peut être :

33 75 42 36 33 31
33 75 42 36 33 32
33 75 42 36 33 33

Une erreur de saisie initiale est immédiatement signalée grâce au "code z". Si l'opérateur saisit :

33 75 42 36 33 31

et enregistre par erreur :

33 75 42 36 33 33

celle-ci est immédiatement révélée à l'opérateur qui peut la corriger, dès qu'il saisit le "code z" si les deux destinataires, portant par hypothèse le même nom, habitent à des étages différents ou à des portes différentes d'un même étage :

33 75 42 36 33 31 08 14 40 17 04 00
33 75 42 36 33 33 08 14 40 17 05 01

étant supposés corrects, on comprend que l'opérateur sera averti s'il enregistre, et dès qu'il enregistre, une erreur de "code z" :

33 75 42 36 33 31 08 14 40 17 05<STOP>

Il est fréquent, en France, dans les immeubles anciens, qu'il y ait deux ou trois appartements par étage et l'on a coutume de les désigner par "droite", "face" et "gauche" en arrivant sur le palier, en montant par l'escalier. L'usager qui est confronté souvent à ce problème, peut alors utiliser le "code z" à quatre chiffre en utilisant le premier groupe de deux chiffres pour désigner l'étage et le deuxième groupe pour désigner la porte avec la signification suivante : 01 = porte gauche, 02 = porte face, 03 = porte droite (ordre pris dans le sens des aiguilles d'une montre). S'il y a plus de trois portes possibles, on peut les numéroter de 01 à 99 dans le sens des aiguilles d'une montre.

Pour la comodité des opérations de routage, il faut faire figurer en clair le nom et l'adresse du destinataire car les ultimes opérations de remise d'un objet se font non pas par des machines mais par l'intervention d'une personne : facteur, livreur, concierge, etc.

Le procédé permet toutefois de simplifier la saisie initiale car, tout au moins en France, il est possible d'obtenir par un terminal informatique fourni par l'Administration des Télécommunications nommé "MINITEL" les coordonnées postales d'une personne dont on connaît le numéro de téléphone. Il est alors facile de procéder à la saisie automatique au moyen d'une imprimante ou d'un interface d'ordinateur, l'opérateur pouvant très bien ne rien comprendre aux mots et même à l'écriture puisqu' il lui suffit de considérer les chiffres du numéro de téléphone. Pour la saisie en clair, il suffit d'effectuer une saisie graphique des informations apparaissant à l'écran, comme cela est bien connu.

Naturellement, il serait particulièrement souhaitable que par le même service fourni par MINITEL, toute personne qui interroge la mémoire reçoive non seulement le nom et l'adresse en clair mais aussi le situant.

On pourrait par exemple agir ainsi : sachant que le destinataire est en France, à Paris et a pour numéro de téléphone :

42 77 02 11

on accède à la liste des abonnés par le MINITEL en formant le numéro 11 sur le clavier. On entre le numéro de téléphone ainsi :

75 (code du département) 42 77 02 11

On recueille sur l'écran puis on saisit par des moyens en soi connus les informations suivantes :

Société RHIN RHONE ROUTE TRANSFRET
43 rue Beaubourg
75003 PARIS 08 14 44 12

Il suffit alors de créer une étiquette ou une plaque, ou bien de conserver en mémoire en vue de l'adressage l'identifiant et le situant combinés :

33 75 42 77 02 11 08 14 44 12

Naturellement, on peut supprimer le code du pays (ici 33 pour la France) si l'on n'a pas de relations internationales. De même, on peut placer en tête le code de département (ici 75 pour Paris) et ensuite le code de pays (ici 33 pour la France) si l'on ne veut pas séparer, notamment pour des facilités de saisie initiale, les chiffres géographiques et les chiffres téléphoniques :

75 42 77 02 11 08 14 44 12

ou :

75 33 42 77 02 11 08 14 44 12

Pour la France, le numéro de département est le seul code d'usage purement géographique de l'identifiant mais le premier nombre du code téléphonique international ayant lui aussi une signification géographique d'importance majeure : identification du pays, il semble préférable de placer celui-ci en tête.

En France, il existe une organisation de l'Administration des Postes nommée "CIDEX" qui comprend plusieurs boîtes aux lettres à un même point de distribution. On peut alors utiliser le "code z" pour identifier le CIDEX par les premier groupe de deux chiffres et le numéro de boîte aux lettres par le dernier groupe de deux chiffres.

On peut souligner que l'on effectue une très importante compression des fichiers en ne conservant en mémoire qu'une seule ligne d'une vingtaine de chiffres à la place d'un texte complexe sur au moins trois lignes et que l'on élimine les problèmes de transcription des écritures : le romain, le grec, l'hébreu, l'arabe, le chinois, le japonais, le cyrillique etc. s'effacent au profit du chiffre qui lui est universel.

En outre, comme l'identifiant correspond à une seul personne, il suffit d'utiliser ce situant (dix ou douze chiffres selon que l'on fait intervenir ou pas le code international) pour diriger le traffic entre deux points : le point d'émission envoie par télématique un liste d'identifiants et le point de réception interroge la base stockant les informations, de sorte que l'on recueille automatiquement et à grande vitesse le situant de chaque identifiant et les nom et adresse en clair.

A noter que la saisie peut être effectuée par un clavier numérique seulement (partie droit d'un clavier d'ordinateur ou calculatrice), grâce à quoi on élimine la raison essentielle d'erreurs de routage, celles-ci provenant pour l'essentiel d'erraurs de saisie alpha-numériques.

La compression des fichiers procure une telle rapidité et une telle facilité de transmission que l'on peut prévoir des fonctionnements plus performants qu'à l'heure actuelle. En voici un exemple concret :

L'approvisionnement d'une grande ville en produits alimentaires suppose des livraisons massives jusqu'à un cen tre distributeur. Pour Paris, il s'agit du "Marché d'Intérêt National de Rungis". Un fournisseur de produits frais se trouve à environ 100 kilomètres de Rungis et ses camions lourds mettent environ deux heures pour y parvenir. Compte tenu des impératifs de déchargement, de tri, de regroupement, de chargement de camions légers pour les livraisons, de circulation et de la réglementation de la circulation urbaine, les camions lourds doivent être arrivés à Rungis avant minuit. Or, le regroupement des produits de différentes catégories, le chargement des camions légers et l'organisation des tournées ne peuvent être réalisés qu'à réception des produits et de la liste des destinataires.

Le premier impératif est le départ des camions lourds, afin de pouvoir remédier à différents contre-temps : crevaison de pneu, panne, accident, ralentissement etc. Donc, si la liste des destinataires n'est pas prête, le camion part quand même. Pendant qu'il est sur la route, on peut transmettre par telex, télécopie ou télématique la liste des destinataires au bureau ad hoc de Rungis. Actuellement, pour une telle transmission en clair et la transcription sur étiquettes et bordereaux de 150 commandes : nom et adresse de chaque destinataire, descriptif et références diverses il faut deux heures et demi. Si le camion lourd part sans liste et que la transmission commence cinq minutes après son départ, la transmission sera terminée 35 minutes après son arrivée. Ce retard peut être encore aggravé et peut atteindre deux heures et demi si la transmission commence quand le camion lourd arrive à Rungis. Il n'est pas possible, dans la réalité, de commencer le tri et le regroupement avant que ne se trouvent simultanément à Rungis la totalité des produits et la liste complète des destinataires.

Grâce à l'invention, ce temps de transmission est ramené de deux heures et demi à dix ou quinze minutes. On comprend clairement la portée pratique de l'invention qui permet une organisation technique nouvelle, beaucoup plus souple et confortable pour le personnel.

Quand il s'agit de destinataires déjà connus et habituels, on peut se contenter de transmettre les dix premiers chiffres de l'identifiant (fonctionnement en "open access").

Un dispositif conforme à l'invention comprend avantageusement, outre un ordinateur (et/ou un terminal du genre MINITEL) associé à un logiciel qui sera décrit plus loin, un codeur qui permet d'éditer des étiquettes, éventuellement auto-collantes, sur chacune desquelles l'identifiant 1 et le situant 2 d'un destinataire apparaissent en code à barres, à proximité du nom et de l'adresse en clair 3. On peut évidemment prévoir aussi l'indication en clair 4 de l'identifiant et 5 du situant selon les applications, selon les usages et les méthodes utilisées (Figure 6). préparation des expéditions d'un centre (de production, de regroupement, de répartition etc.) jusqu'à la remise individuelle à un destinataire lointain en parcourant toutes les étapes intermédiaires de tri, regroupement, placement rationnel dans des véhicules, dégroupement etc. Les opérations situées aux deux extrémités de ce processus sont pratiquement les seules qui font appel à l'intervention humaine : prise de l'initiative d'origine et remise individuelle, et c'est à ces deux occasions que l'indication en clair du destinataire est nécessaire. Au contraire, toutes les phases du processus physique lui-même peuvent être déclenchées, conduites et terminées par des moyens mécaniques plus ou moins automatisés.

On voit qu'ainsi le procédé conforme à l'invention permet l'automatisation des opérations industrielles prévoyant l'action d'un dispositif sur des objets repérage, tri, déplacement, rangement, collecte, groupage etc. La présence simultanée de mentions en clair et d'un code à barres, sans saisie manuelle, permet de reconsidérer dans son ensemble la conduite du processus complexe qui va de la préparation des expéditions d'un centre (de production, de regroupement, de répartition etc.) jusqu'à la remise individuelle à un destinataire lointain en parcourant toutes les étapes intermédiaires de tri, regroupement, placement rationnel dans des véhicules, dégroupement etc. Les opérations situées aux deux extrémités de ce processus sont pratiquement les seules qui font appel à l'intervention humaine : prise de l'initiative d'origine et remise individuelle, et c'est à ces deux occasions que l'indication en clair du destinataire est nécessaire. Au contraire, toutes les phases du processus physique lui-même peuvent être déclenchées, conduites et terminées par des moyens mécaniques plus ou moins automatisés.

On va maintenant donner un exemple complet d'un tel processus, en utilisant les éléments déjà représentés aux figures 2 à 6 ainsi que ceux des figures 7 et 8 :

Cet exemple est celui d'une société de transport qui possède plusieurs agences, des centres de regroupement et d'expéditions et qui, bien entendu, doit livrer les colis reçus à une pluralité de destinataires. Cette société peut recevoir des dizaines de colis d'un seul fournisseur, des biscuits par exemple, destinés à autant de magasins, des super-marchés par exemple. Dans ce cas, il est clair que cette société reçoit certainement d'autres produits, par exemple des boîtes de conserve, pour ces mêmes super-marchés.

Pour un centre de regroupement, de tri et d'expédition de cette société de transport, il faut non seulement connaître aussi précisément que possible le destinataire de chaque colis mais aussi le fournisseur d'origine et l'expéditeur s'ils sont distincts. En outre, il lui faut dégrouper les colis reçus, les trier et les regrouper par destinataire. Enfin, il faut charger les camions en respectant un ordre rationnel et organiser la tournée du livreur en consé

Pour simplifier l'exposé, on suppose qu'un premier tri informatique a édité le document de la figure 7 pour tous les destinataires situés exclusivement à Paris, dans la parcelle 08 14 (avec une exception qui sera explicitée plus loin).

Dans la colonne suivante, on trouve les identifiants des différents destinataires et on peut vérifier que leur code de situation géographique est bien 75, celui de Paris. Dans la colonne suivante, on trouve les situants correspondants (ayant tous les coordonnées de la parcelle 08 14, à l'exception du premier envoi : il provient de l'expéditeur 1391722317 et a pour destinataire 7547660308 situé à Paris, parcelle 03 11, coordonnées 31 21. On a choisi cette particularité pour montrer que le logiciel peut être adapté à certaines exceptions et l'on suppose ici que cet envoi hors secteur a une raison objective et ne constitue pas une erreur) et, enfin, le nombre de colis et leur poids, ainsi qu'une colonne des totaux partiels et cumulés.

On observe que ce document, bien qu'intermédiaire, procure déjà des renseignements précieux puisque l'on connaît agence par agence le nombre de colis et leur poids total pour la parcelle principale 08 14 et pour la parcelle secondaire ici, 03 11. Il suffit donc de demander le total de toutes les agences pour connaître la charge de travail parcelle par parcelle.

Le logiciel adapté à ce travail de regroupement travaille bien entendu avec les identifiants et les situants et prévoit finalement un état des livraisons selon les coordonnées précises de chaque parcelle et ici on ne retient que la parcelle 08 14, comme cela est représenté sur la figure 8. On y voit en haut à gauche le code de situation géographique : 75 (Paris) 08 14 (parcelle). La première colonne est celle des coordonnées x et y, la deuxième est celle des identifiants des expéditeurs, la troisième celle des identifiants des destinataires et enfin pour chaque envoi, le nombre de colis et leur poids ainsi que leur récapitulatif.

Ce document fait aparaître, en clair, que le même destinataire 7542303038 situé en 75 08 14 17 38, reçoit quatre envois de 7, 5, 11 et 5 colis de quatre fournisseurs différents, pour un total de 28 colis et 362 kilos.

On voit aussi qu'aux coordonnées 15 35 se trouvent trois destinataires différents, ce qui signifie qu'il s'agit d'un immeuble collectif ou bien qu'il y a trois magasins, etc.

La dernière ligne de ce bordereau donne le nombre de colis et le poids total des livraisons de la parcelle 08 14 : 123 colis et 1.530 kilos. On vérifie que ces deux chiffres correspondent à ceux du document de la figure 7, diminués de ceux correspondants à la livraison hors secteur : 8 colis de 96 kilos pour le situant 03 11 31 21.

A partir de ces éléments, il est facile d'organiser le chargement, la tournée et les livraisons.

Au centre de regroupement, se trouve un carrousel de type connu en soi (non représenté) comprenant un transporteur à parcours fermé sur lui même, par exemple comme ceux qui se trouvent dans les aéroports pour la remise des bagages à l'arrivée des voyageurs, et sur lequel les colis arrivent dans n'importe quel ordre, par au moins une entrée. Il peut s'agir de paquets postaux, de colis de toutes sortes, de produits alimentaires conditionnés, de caisses, de cartons, etc.

Ce transporteur comporte un ou plusieurs aiguilleurs également de type connu, souvent dénommé "gendarme" qui, sous l'effet d'un moteur, pivote pour se placer soit hors du parcours des colis pour les laisser continuer leur déplacement, soit obliquement sur ledit parcours pour obliger tel colis repéré à quitter le transporteur et le diriger vers une aire de stockage, un autre transporteur, un réceptacle etc.

Avec l'exemple décrit ici, les colis sont munis chacun de son étiquette avec code à barres et l'installation comprend un lecteur dudit code. On peut accepter qu'un opé rateur manipule un lecteur mobile ou "crayon optique" sur des étiquettes placées diversement. On peut aussi prévoir une standardisation de l'emplacement des étiquettes et un lecteur fixe afin que tous les colis, sans exception, passent devant ce lecteur. Ce dernier fait partie d'un ensemble électronique qui interprête chaque code à barre et qui est susceptible de commander le moteur de l'aiguilleur, respectivement de chaque aiguilleur, en fonction de chaque colis, selon sa destination.

L'ensemble électronique est associé à un logiciel que l'on a conçu de manière plus ou moins élaborée selon les applications.

Ce logiciel peut, par exemple, comprendre un programme de situation géographique détaillé au point de contenir en mémoire tous les points de livraison possible par zone et leur modalité d'accès : heures d'autorisation et d'interdiction, réglementation particulière, largeur des voies, conditions d'approche (sens interdits, stationnement réglementé etc.). Il est donc possible de gérer non seulement le tri des colis secteur par secteur (parcelle par parcelle) mais également de les grouper par camion et, même, distribuer les colis dans l'ordre des livraisons afin que les colis du dernier destinataire soient chargés en premier, à l'avant du camion, et les colis du premier destinataire en dernier, à l'arrière du camion.

Cela implique, bien évidemment, que le logiciel a en mémoire tous les éléments géographiques des tournées et il devient facile d'éditer par une imprimante une "feuille de route" pour chaque conducteur de camion, afin qu'il soit automatiquement guidé selon le parcours le plus sûr et le plus rentable : soit le plus court, soit le plus rapide, par exemple.

Le logiciel trie les colis par secteurs, ou parcelles, et ensuite par voies et trajets. A partir du bordereau de la figure 8, on extrait, pour la description ci-après, les livraisons destinées à la rue Saint Denis. Celle- ci est en sens unique du Nord vers le Sud. L'optimisation de la tournée est fournie par le logiciel qui prévoit l'entrée dans la rue Saint Denis par son angle avec la rue Réaumur, laquelle est en sens unique de l'Ouest vers l'Est car cet angle est le premier accès possible pour la situation du premier client. le camion de livraison doit donc arriver soit par l'Ouest de la rue de Réaumur, soit par le Nord de la rue Saint Denis, soit encore par le boulevard de Sébastopol et la rue du Caire selon le point de départ du camion pris en considération.

Arrivé rue Saint Denis, le camion effectuera les livraisons dans l'ordre suivant :

1- "CREPUSCULE", 162 rue Saint Denis
75 45 08 42 70

2- HAMILTON James, 128 rue Saint Denis
75 42 33 30 38

3- PETIT Suzanne, 143 rue Saint Denis
75 42 33 27 37

4- MASY Guy, 143 rue Saint Denis
75 42 33 92 76

5- COUTEILLE Hervé, 143 rue Saint Denis

75 45 08 87 02
6- ALBERGE Marcel, 107 rue Saint Denis
75 42 60 21 44

Le chargement du camion aura été effectué dans le bon ordre pour optimiser la tournée, en tenant compte de sa longueur en kilomètres et en temps, de la façon suivante :

Le chargement commencé par le dernier destinataire et terminé par le premier :

| | | | | | | | | | | | |
|---|---|---|---|---|---|---|---|---|---|---|---|
| 75 | 42 | 60 | 21 | 44 | 08 | 14 | 11 | 13 | : | 20 colis, | 208 kilos |
| 75 | 45 | 08 | 87 | 02 | 08 | 14 | 15 | 35 | : | 12 colis, | 60 kilos |
| 75 | 42 | 33 | 92 | 76 | 08 | 14 | 15 | 35 | : | 11 colis, | 110 kilos |
| 75 | 42 | 33 | 27 | 37 | 08 | 14 | 15 | 35 | : | 27 colis, | 372 kilos |
| 75 | 42 | 33 | 30 | 38 | 08 | 14 | 17 | 38 | : | 28 colis, | 362 kilos |
| 75 | 45 | 08 | 42 | 70 | 08 | 14 | 20 | 49 | : | 25 colis, | 418 kilos |

Dans la réalité, une tournée comprend souvent beaucoup plus de destinataires et l'invention n'en est que beaucoup plus intéressante par la simplification qu'elle apporte.

Le groupage, organisé avant le départ, peut se faire réellement au moyen de palettes, containers, box-palettes etc.

Il faut noter que l'invention prévoyant la commande de dispositifs au moyen de chiffres d'accès publics, elle permet de simplifier la réalisation de certaines installations qui, actuellement, sont très compliquées, voire irréalisables.

C'est le cas, notamment, d'un dispositif qui peut être placé à bord d'un véhicule et qui affiche le circuit optimisé entre un point de départ (là où se trouve le véhicule à un moment donné) et un point d'arrivée (destination du véhicule). Il suffit, en effet, d'entrer le point de départ selon les coordonnées de la zone voulue. Par l'effet de zoom décrit plus haut, on peut procéder par approximations successives. Pour simplifier, on peut citer le cas d'un véhicule qui se trouve à Paris, porte d'Auteuil et qui cherche l'angle de la rue Réaumur et de la rue Saint Denis. Le conducteur entre dans le dispositif la coordonnée de la parcelle de départ :
75 05 01
puis la cordonnée du point d'arrivée :
75 08 14 57 22

Le dispositif est associé à un logiciel qui "répond" à cette interrogation en donnant dans l'ordre du parcours une série de coordonnées très caractéristiques : places, monuments, voies principales ou circuits pré-établis, ou bien en affichant le circuit graphiquement, par reproduction au moins schématique de la zone concernée, en tenant compte des sens interdits, des heures de pointes à certains endroits, des interdictions réglementaires etc.

Cela peut permettre d'établir l'approche d'un secteur de livraison ou d'aider des automobilistes.

Dans le cas d'une organisation de livraison du type décrit ci-dessus, on peut prévoir, au moment du départ du camion, l'édition d'un ou plusieurs documents qui sont tous créés à partir du procédé conforme à l'invention mais qui groupent des informations diverses ou différemment présentées :
- bordereau de groupage,
-feuille de route avec kilométrage et durée probable,
-plan d'approche,
-carte et plans,
- bons de livraison,
-devis de poids,
-etc.

L'invention s'applique à tout transport physique autre que des colis de messagerie et en tout premier lieu à l'acheminement du courrier. Elle permet d'organiser la collecte, le tri, l'acheminement et la distribution jusques et y compris garnir, organiser, remplir la sacoche individuelle du facteur, maison par maison, boîte à lettres par boîte à lettres, sans aucune intervention manuelle.

On utilise pour celà les machines en soi connues qui exécutent les tris et groupements combinés aux transports terrestres, maritimes ou aériens. Le code à barres est particulièrement bien adapté au traitement des lettres dont la morphologie est assez constante pour permettre l'usage de machines automatiques pour l'apposition et la lecture à grande vitesse de ce code, lettre par lettre.

Un centre de tri peut assez facilement être équipé d'un dispositif conforme à l'invention qui effectue le tri fin et l'ordonnancement complet du courrier sacoche par sacoche mais, même sans aller si loin, il est possible de rationnaliser considérablement le tri plus grossier effectué actuellement.

Au lieu d'utiliser le code à barres, on peut aussi utiliser le codage informatique qui a l'avantage d'éditer des chiffres simultanément en clair et en lecture automatique. Les chiffres de l'identifiant et du situant apparaissent alors comme ceux des chèques actuels (numéros de compte, de chèque, de banque, etc.) et se suffisent à eux mêmes pour leur compréhension visuelle directe par l'homme et automatique par des moyens magnétiques, optiques ou autres.

La finesse extrême du tri opéré grâce à l'invention permet bien d'autres applications. Parmi celles- ci, on peut citer :

- les enquêtes de chalandises. Dans un premier temps, l'organisme (par exemple un super-marché) relève les identifiants des clients à partir d'éléments qui peuvent être les actuels renseignements fournis habituellement lors des paiements : carte d'identité, chèque, carte de crédit, etc.

Les identifiants sont recueillis, classés et mis en mémoire. Un logiciel permet alors de traiter ces éléments de toute manière voulue : statistiquement et/ou graphiquement. On peut prévoir l'affichage des parcelles géo graphiques et l'allumage point par point des clients par les coordonnées de leur domicile, grâce à quoi on peut avoir une visualisation immédiate de la dispersion de la clientèle.

- L'approche géographique de la recherche de personnes. Par exemple, une société de travail temporaire peut, pour un client donné et géographiquement situé, choisir celle des personnes correspondant à la demande du client qui a le domicile le plus proche du lieu de travail, ou de la ligne de métro directe etc. Selon un autre exemple, si une personne cherche dans une grande ville un dépanneur de télévision, elle trouve actuellement dans l'annuaire (imprimé ou électronique par MINITEL en France) une grande quantité de réponses possibles mais elle ne peut pas très efficacement choisir le plus proche de son domicile car tous les dépanneurs possibles sont classés par ordre alphabétique et il faudrait donc parcourir toute la liste et relever au passage le nom, l'adresse et le numéro de téléphone de tous ceux dont l'adresse laisse penser qu'ils sont situés à proximité. Grâce à l'invention, il suffit d'introduire le situant de la personne qui cherche ce dépanneur pour qu'un logiciel réponde à la question posée avec la plus grande précision en ne donnant qu'une ou deux réponses parfaites.

Comme on l'a précisé plus haut, il est possible de remplacer les coordonnées cartésiennes par des numéros de parcelles, ce qui est particulièrement bien adapté aux sites ruraux. Dans ce cas, on utilise le plan cadastral et l'on prend les numéros individuels, sans relation avec un système virtuel d'axes orthogonaux. Un destinataire habitant dans une maison de campagne isolée (mais rattachée nécessairement à une commune et possédant un code postal) pourrait être par exemple :

33 64 990 59 59 03 84 4822 :

- 33 = France,
- 64 = Pyrénnées Atlantiques,
- 990 = Commune de Villefranque,
- 59 59 03 84 = No de téléphone,
- 4822 = No de la parcelle de la commune où se trouve la maison du destinataire.

Il ressort de la description ci-dessus qu'à partir du seul identifiant on obtient le situant correspondant et qu'à partir du seul situant on obtient tous les identifiants ayant en commun ce situant.

Cela permet des recoupements, des vérifications et des facilités de traffic inconnues jusqu'à ce jour.

## Revendications

1- Procédé pour l'adressage à un destinataire soit d'un message, notamment informatique, soit d'un objet tel que document, pli, lettre, paquet, colis, fardeau et autres, caractérisé en ce que l'on affecte à chaque message, ou objet, deux repères dits respectivement "identifiant" et "situant" qui correspondent ensemble au seul destinataire, l'identifiant étant formé par la combinaison d'un code de situation géographique et d'un numéro de téléphone du destinataire, tandis que le situant est formé par des coordonnées, de préférence sous forme de chiffres, issues d'une trame que l'on établit pour une zone géographique déterminée, coordonnées qui correspondent à une maille de la trame représentant le plus précisément possible la situation géographique du destinataire.

2- Procédé selon la revendication 1, caractérisé en ce que le code de situation géographique est formé par le code officiel d'une zone administrative telle qu'un Département pour la France, un "County" pour les Etats Unis et le Royaume Uni, un "Landkreis" pour l'Allemagne, et analogue.

3- Procédé selon la revendication 1, caractérisé en ce que le code de situation géographique est formé par le code postal de l'adresse du destinataire.

4- Procédé selon la revendication 1, caractérisé en ce que la trame est formée par le cadastre représentant des parcelles numérotées, les coordonnées étant soit la combinaison d'abcisses et d'ordonnées, soit le numéro des parcelles.

5- Procédé selon la revendication 1, caractérisé en ce que la trame est un quadrillage.

6- Procédé selon la revendication 5, caractérisé en ce que la trame comprend au moins un ensemble de zones déterminées individuellement par des repères, certaines au moins de ces zones comprenant un quadrillage associé à des coordonnées.

7- Procédé selon la revendication 6, caractérisé en ce que le quadrillage des zones correspondant à des villes est à maille plus serrée que celle du quadrillage des zones correspondant à la campagne.

8- Dispositif pour la mise en oeuvre du procédé ci-dessus, caractérisé en ce qu'il comprend, éventuellement dans des lieux distincts, d'une première part une mémoire contenant pour chaque destinataire possible, son nom et son adresse en clair ainsi que son "identifiant" et son "situant", d'une deuxième part un ordinateur et au moins un logiciel de traitement de données, d'une troisième part un appareil destiné à marquer des objets tels que documents, plis, lettres, paquets, colis, fardeaux et autres, soit directement, soit par l'intermédiaire d'étiquettes, plaques et analogues afin que chaque objet porte à la fois les données en clair, l'identifiant et le situant ainsi qu'éventuellement un code de lecture automatique, tel que celui connu sous le nom de "code à barres", et d'une quatrième part des moyens de tri unitaire et de groupage des objets marqués en vue de leur expédition.

9- Dispositif selon la revendication 8, caractérisé en ce qu'il comprend des moyens de tri unitaire et de groupage des objets marqués, avant distribution aux destinataires.

10- Dispositif selon la revendication 9, caractérisé en ce que les moyens de tri unitaire et de groupage des objets marqués avant distribution comprennent un carrousel associé à au moins une arrivée d'objets et à au moins une sortie d'objets, cette sortie, respectivement chaque sortie, étant munie d'un guide mobile entre deux positions dans l'une desquelles il est situé sur le parcours du carrousel en vue de diriger vers la sortie correspondante l'objet situé sur le carousel et destiné à quitter celui-ci par ladite sortie et dans l'autre desquelles il est hors du parcours du carousel en vue de laisser passer chaque objet devant éviter ladite sortie.

11- Dispositif selon la revendication 8, caractérisé en ce qu'il comprend des moyens d'affichage tels qu'un écran pour la visualisation de représentations graphiques de zones géographiques et de leur trame correspondante.

1 Georg ZARZAVATDJIAN
1421 Spring Road
ARLINGTON VA 22215
(U.S.A.) 1 222 703 845 09 84

2 Zadora LACZKOWSKA
Ul. Stojalowskiego, 47
35-568 SZCZECINEK
(Pologne) 48 32 41 47 821

3 Herr Helmut BAUER
Aiblinger Strasse 8/1
8000 MÜNCHEN
(Bundesrepublik Deutschland) 49 80 89 16 87 59

4 Maïté UNHASSOBISCAY-GOYENETCHE
Uhaldia Etchéa
64220 DONIBANE-GARAZI
(France) 33 64 59 37 88 47

5 Stefan BUERBEBISTAH
396 Ulitza Techerghiol
18345 SARMIZECETUZA
(Roumanie) 40 18 5 89 131

6 **ТОРГОВО-ПРОМЫШЛЕННАЯ ПАЛАТА СССР**
**УПРАВЛЕНИЕ ПО ПАТЕНТОВАНИЮ ИЗОБРЕТЕНИЙ**
Москва, 101012, ул. Куйбышева, 5/2. 70 100 95 925 16 61

7 **בנימין בריש**
**עורך-דין-עורך פטנטים**
אבן גבירול 2, בית אליהו, תל-אביב, ת.ד. 23008, תל-אביב 61 230 972 61 3 26 98 50

8 聖島國際專利商標聯合事務所
台北市長安東路二段52號3樓
郵遞區號 886 10 2 531 51 67

9 **瀧 野 特 許 事 務 所**
〒100 東京都千代田区内幸町2－1－1 飯野ビル827号室 81 100 3 509 99 96

**Fig.1**

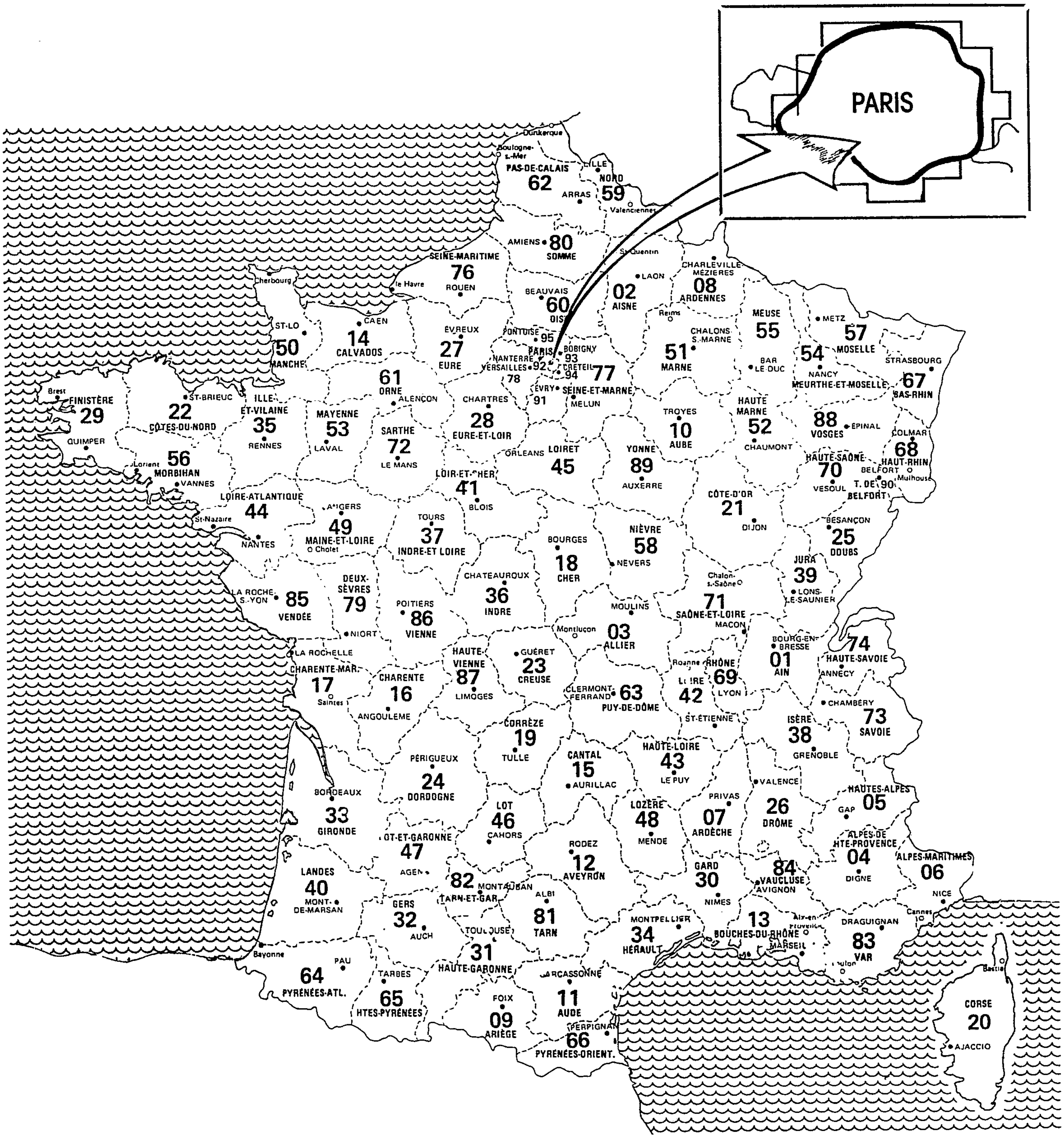

Fig.2

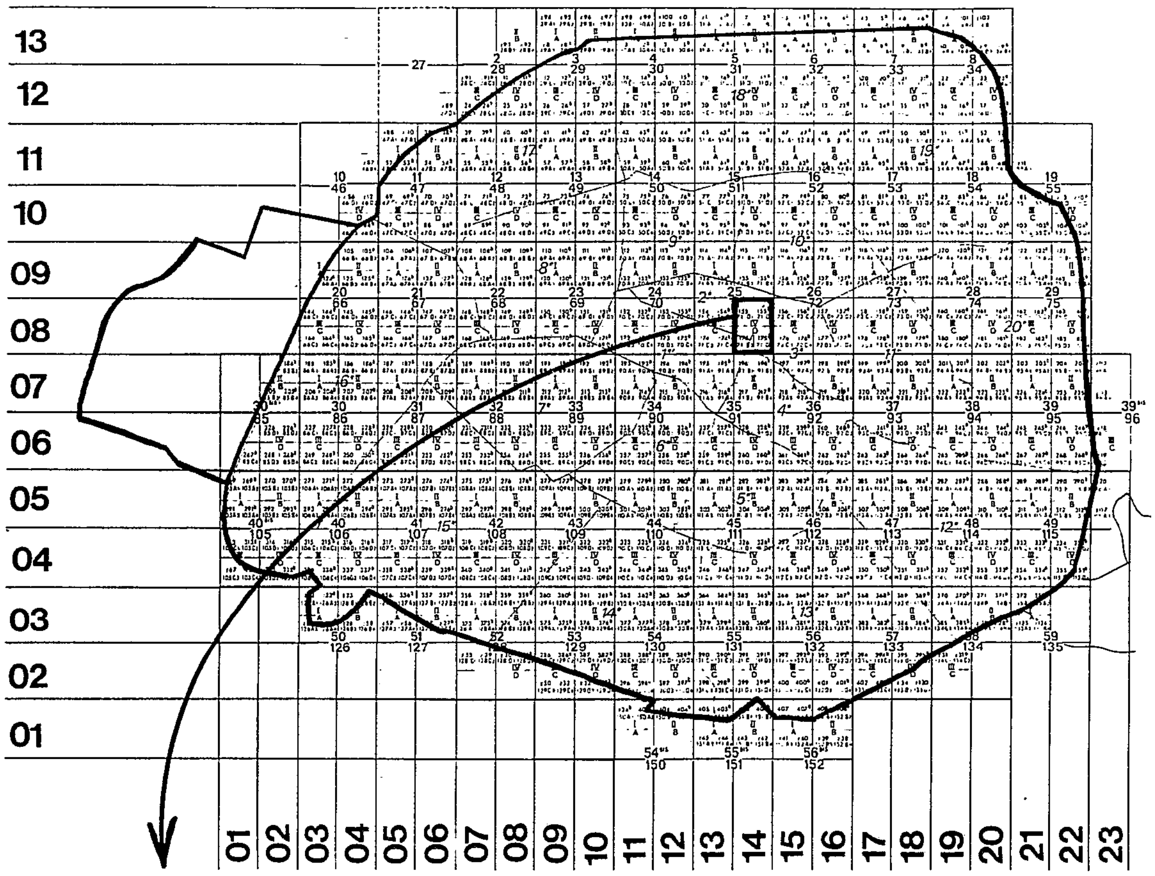


Fig.3

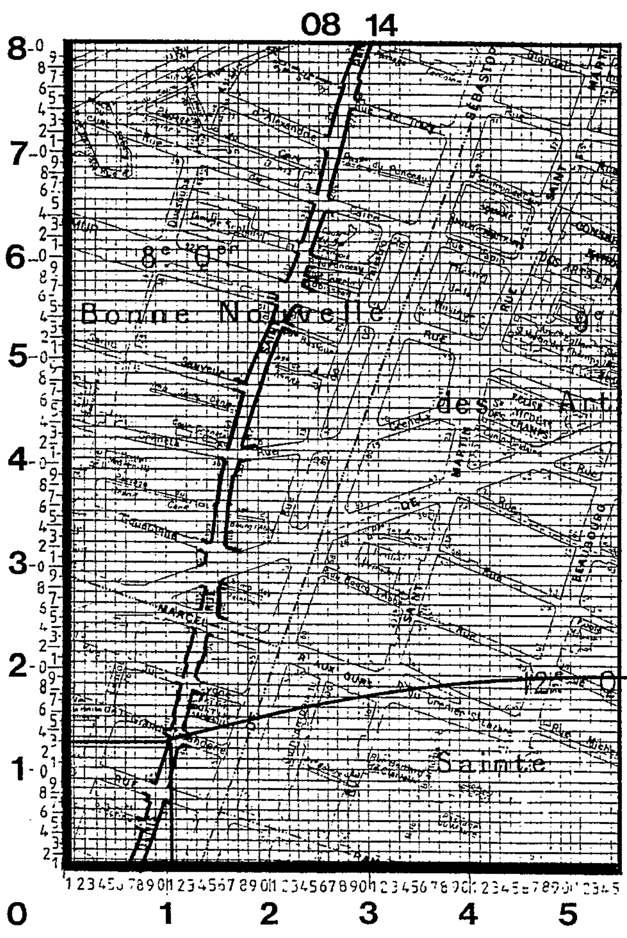


Fig.4

14·21 ▸100◂

KILI WATCH (Ste) - - - - - - - - 4221 35 92

10·11 ▸101◂

CORNEDE Simone - - - - - - 4508 04 87
FITTON Brigitte - - - - - - - 4236 08 54
LEGRAND Jacqueline - - - - 4236 60 83
**LE MONDE SAUVAGE** - - - 4261 85 06
QUINIOU H (et Cie S.A.R.L) - 4233 08 57

10·12 ▸103◂

APPE Benedicte - - - - - - - - 4508 12 20
BAZIL Danièle - - - - - - - - - 4233 10 76
BERKOWICZ Gerald - - - - - 4508 86 62
DELANNOY René-Pierre - - - 4508 45 44
DURAND Eric - - - - - - - - - - 4508 57 64
LEROY Michel - - - - - - - - - - 4233 82 66
MALTERRE Valérie - - - - - - - 4236 71 44
PERES Hélèna - - - - - - - - - - 4236 45 68
SCHNETZLER Bernard - - - - 4236 63 85
SPILAK Carlos - - - - - - - - - 4233 59 42
TOUPOURIEN (Sté) - - - - - - 4296 43 93

10·12 ▸105◂

CARLUER Pamela - - - - - - - 4508 55 03
DIROU René - - - - - - - - - - - 4260 99 91
ESTEGASSY Michel - - - - - - 4703 36 89
GUENE Hugues - - - - - - - - - 4296 49 86
OLSZEWSKI Jacek - - - - - - - 4233 64 55
RAGHUB Yussef - - - - - - - - 4260 66 32
ROBERT Frédéric-Pierre - - - 4296 91 02
TEXAS BEEF - - - - - - - - - - - 4236 60 90

15·25 ▸106◂

S.B.C. (SARL) - - - - - - - - - - 4236 93 42

11·13 ▸107◂

ALBERGE Marcel - - - - - - - - 4260 21 44
BANQUE DE L'IMAGE - - - - 4233 00 26
DOISY Gilles - - - - - - - - - - 4261 44 65
LUNEL Eric - - - - - - - - - - - 4236 57 41
NEU Gérard - - - - - - - - - - - 4296 95 55
RIPERT Claire - - - - - - - - - - 4508 45 47

LESr.
METTHE.
PECCINI Rola.
RIANDEY Solin

BAR DU CERF - - -
BERROUS (Sté) - - - -
DAPREY Daniel - - - -
FROIDUROT Dominique
FROIDUROT Yvonne - - -
GOUIN Michel - - - - - -
IMPRO (Institut Musical
pour la Pédagogie du
Rendement Optimum)
PERRIN Jean-Yves - - -
SOCCLATEX - - - - - - -
SOCOLATEX - - - - - -
TORMO Patricia - - - - -

▸121◂

DEBOSQUE Damien - - - -
DE LA CORTE Jean-Jacque
FIVAZ Eric - - - - - - - - -
FUJII Toshi - - - - - - -
GHIGLIONE Bernard - -
GUILLAUDIN Christian
LE GRILL SAINT LEU - -
NAUDIN Nathalie - - - -
REINHART Grégory - -
VIGUIER Christine - -

▸12

BLOUET Dominique
DEMAILLY Christian
JIANHUA Zleng - - -
JOUBERT Marie - - - -
LABORIE Manuel - - -
LE CLERE Denise - - - -
LETERRIER Daniel
photo d'art - - - - - -
MELLPERROT Marie-Josée
NECHAL Serge - - - - - - -
PONS Antonio - - - - - - - -

Fig.5

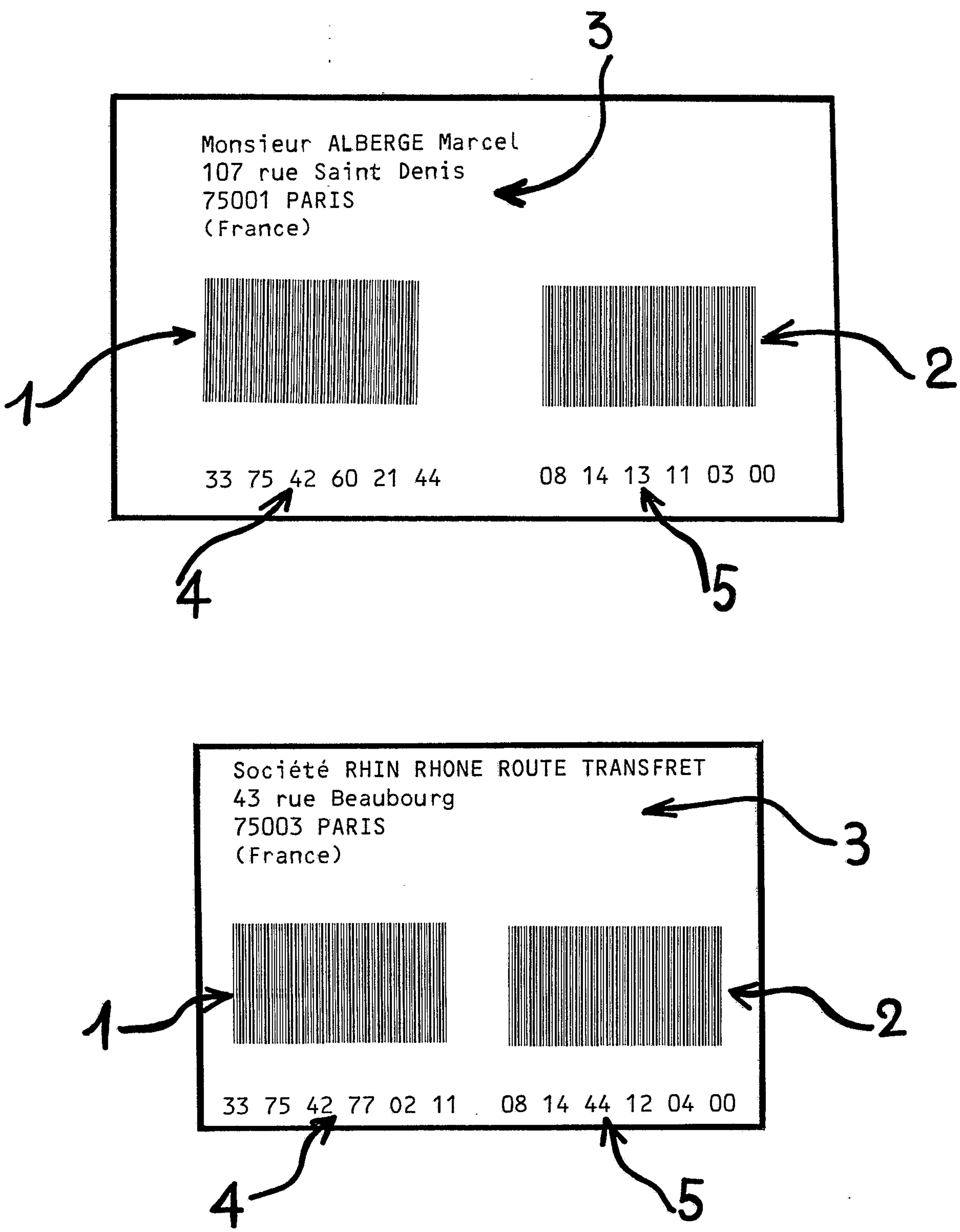
Monsieur ALBERGE Marcel
107 rue Saint Denis
75001 PARIS
(France)
33 75 42 60 21 44
08 14 13 11 03 00
Société RHIN RHONE ROUTE TRANSFRET
43 rue Beaubourg
75003 PARIS
(France)
33 75 42 77 02 11
08 14 44 12 04 00

Fig.6

| AGENCES | IDENTIFIANT Expéditeur | IDENTIFIANT Destinataire | SITUANT Destinataire | Nombre de colis | | Poids | Tot. |
|---|---|---|---|---|---|---|---|
| 1342724220 | | | | | | | |
| 9443962583 | 1391722317 | 7547660308 | 0311 3121 | 8 | | 96 | |
| | | | 0311 → | | 8 | | 96 |
| | 1391722317 | 7542333038 | 0814 1738 | 7 | | 122 | |
| | 1391114760 | 7542332737 | 0814 1535 | 11 | | 230 | |
| | 1342702123 | 7545084270 | 0814 2049 | 3 | | 17 | |
| | 1342702133 | 7542602144 | 0814 1113 | 5 | | 60 | |
| | | | 0814 → | 26 | 26 | 429 | 429 |
| | | | Total Agence : | | 34 | | 525 |
| 6978375485 | | | | | | | |
| 9443962583 | 6978112712 | 7545088702 | 0814 1535 | 12 | | 60 | |
| | 6978254212 | 7545084270 | 0814 2049 | 2 | | 20 | |
| | 6978783310 | 7542333038 | 0814 1738 | 5 | | 40 | |
| | 3825421721 | 7542332737 | 0814 1535 | 3 | | 12 | |
| | 6942712342 | 7542602144 | 0814 1113 | 1 | | 8 | |
| | | | 0814 → | 23 | 23 | 140 | 140 |
| | | | Total Agence : | | 57 | | 665 |
| 6888274488 | | | | | | | |
| 9443962583 | 6888274488 | 7542602144 | 0814 1113 | 3 | | 20 | |
| | 6888274488 | 7542333038 | 0814 1738 | 11 | | 160 | |
| | 6888274488 | 7545084270 | 0814 2049 | 5 | | 81 | |
| | 6888274488 | 7542332737 | 0814 1535 | 7 | | 90 | |
| | 6888233916 | 7542339276 | 0814 1535 | 11 | | 110 | |
| | | | 0814 → | 37 | 37 | 461 | 461 |
| | | | Total Agence : | | 94 | | 1126 |
| 4665385153 | | | | | | | |
| 9443962583 | 4665172511 | 7542333038 | 0814 1738 | 6 | | 40 | |
| | 4665172511 | 754[illegible]602144 | 0814 1113 | 11 | | 120 | |
| | 4663211842 | 7542332737 | 0814 1535 | 5 | | 40 | |
| | 4663222170 | 7545084270 | 0814 2049 | 15 | | 300 | |
| | | | 0814 → | 37 | 37 | [illegible] | [illegible] |
| | | | Total Agence | | 131 | | 1626 |

Fig.7

75 0814

| x - y | IDENTIFIANT Expéditeur | IDENTIFIANT Destinataire | Nombre de [illegible] | POIDS | RECAPITULATIF | |
|---|---|---|---|---|---|---|
| 1738 | 1391722317 | 7542303038 | 7 | 122 | | |
| 1738 | 6978783310 | 7542303038 | 5 | 40 | | |
| 1738 | 6888274448 | 7542303038 | 11 | 160 | | |
| 1738 | 4665172511 | 7542303038 | 5 | 40 | | |
| 1738 | | 7542303038 | 28 | 362 → | 28 | 362 |
| 1535 | 1391114760 | 7542332737 | 11 | 230 | | |
| 1535 | 3825421721 | | 3 | 12 | | |
| 1535 | 6888274488 | | 7 | 90 | | |
| 1535 | 4663211842 | | 6 | 40 | | |
| 1535 | | 7542332737 | 27 | 372 → | 27 | 372 |
| 1535 | 6978112712 | 7545088702 | 12 | 60 | | |
| 1535 | | 7545088702 | 12 | 60 → | 12 | 60 |
| 1535 | 6888233916 | 7542339276 | 11 | 110 | | |
| 1535 | | 7542339276 | 11 | 110 → | 11 | 110 |
| 2049 | 1342702133 | 7545084270 | 3 | 17 | | |
| 2049 | 6978254212 | | 2 | 20 | | |
| 2049 | 6888274488 | | 5 | 81 | | |
| 2049 | 4663222170 | | 15 | 300 | | |
| | | 7545084270 | 25 | 418 → | 25 | 418 |
| 1113 | 1342702133 | 7542602144 | 5 | 60 | | |
| 1113 | 6942712342 | | 1 | 8 | | |
| 1113 | 6888274488 | | 3 | 20 | | |
| 1113 | 4665172511 | | 11 | 120 | | |
| | | 7542602144 | 20 | 208 | 20 | 208 |
| | TOTAL 0814 → | | | | 123 | 1530 |

Fig.8

Office européen des brevets

# RAPPORT DE RECHERCHE EUROPEENNE

Numero de la demande

EP 89 40 0322

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 122 526 (D.F. DLUGOS)<br>* Colonne 4, lignes 19-33; colonne 6, lignes 25-56 * | 1,3,5,8 | B 07 C 3/18<br>B 07 C 3/00 |
| A | FR-A-2 414 962 (DELABY)<br>* Figures; page 1, lignes 15-25 * | 1 | |
| A | US-A-3 858 054 (M.A. HUNTER)<br>* Résumé * | 8,9 | |
| D,P X | EP-A-0 272 355 (LEE KING)<br>* Colonne 1, lignes 29-47; colonne 2, ligne 25 - colonne 3, ligne 4; colonne 4, lignes 4-38 * | 1,3,4,8,9 | |

DOMAINES TECHNIQUES RECHERCHES (Int. Cl.4)

B 07 C

Le présent rapport a été établi pour toutes les revendications

| Lieu de la recherche | Date d'achèvement de la recherche | Examinateur |
|---|---|---|
| LA HAYE | 21-04-1989 | HENROTTE I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)